(19) Europäisches Patentamt
European Patent Office
Office européen des brevets

(11) **EP 4 641 688 A1**

(12) **EUROPEAN PATENT APPLICATION**

(43) Date of publication:
**29.10.2025 Bulletin 2025/44**

(21) Application number: **25167967.6**

(22) Date of filing: **02.04.2025**

(51) International Patent Classification (IPC):
**H01M 4/58** (2010.01)   **H01M 4/1397** (2010.01)
**H01M 4/62** (2006.01)   **B01D 1/18** (2006.01)
**B01J 2/04** (2006.01)   **C01B 25/45** (2006.01)
**F26B 3/12** (2006.01)

(52) Cooperative Patent Classification (CPC):
**H01M 4/1397; C01B 25/45; F26B 3/12;
H01M 4/5825; H01M 4/625;** H01M 2004/021

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.04.2024 KR 20240053524**

(71) Applicant: **Samsung SDI Co., Ltd.
Yongin-si, Gyeonggi-do 17084 (KR)**

(72) Inventors:
• **KIM, Young-Ki
Yongin-si, 17084 (KR)**
• **CHOI, Aram
Yongin-si, 17084 (KR)**
• **KIM, Sangmi
Yongin-si, 17084 (KR)**
• **DOO, Sungwook
Yongin-si, 17084 (KR)**
• **KANG, Gwiwoon
Yongin-si, 17084 (KR)**

(74) Representative: **Marks & Clerk LLP
15 Fetter Lane
London EC4A 1BW (GB)**

(54) **POSITIVE ELECTRODE ACTIVE MATERIAL FOR RECHARGEABLE LITHIUM BATTERY, METHOD OF MANUFACTURING THE SAME**

(57) A positive electrode active material, a method of manufacturing thereof, a positive electrode active material slurry, and a rechargeable lithium battery are provided. The method of manufacturing a positive electrode active material includes forming a mixture by mixing an iron phosphate precursor, a lithium source, a carbon source, and a dopant source with each other; performing a spray drying to dry the mixture; and performing a calcination on the dried mixture. The dopant source includes a titanium compound.

FIG. 6

EP 4 641 688 A1

**Description**

**BACKGROUND**

**1. Field**

One or more embodiments of the present disclosure relates to a positive electrode active material for a rechargeable lithium battery, a method of manufacturing the positive electrode active material, a positive electrode active material slurry including the positive electrode active material, and a rechargeable lithium battery including the positive electrode active material.

One or more embodiments of the present disclosure relates to a positive electrode active material including an olivine-based lithium compound, a method of manufacturing the positive electrode active material, a positive electrode active material slurry including the positive electrode active material, and a rechargeable lithium battery including the positive electrode active material.

**2. Description of the Related Art**

Due to the widespread use of battery-powered electronic devices, such as mobile phones and/or laptop computers, and/or electric vehicles, it is desirable to develop rechargeable batteries that offer relatively high energy density and high capacity. Extensive research has been undertaken to enhance the performance of rechargeable lithium batteries.

A rechargeable lithium battery includes a positive electrode, a negative electrode, and an electrolyte. The positive electrode and negative electrode (e.g., each) include an active material in which intercalation and deintercalation may occur. The rechargeable lithium battery generates electrical energy caused by oxidation and reduction reactions when lithium ions are intercalated and deintercalated.

**SUMMARY**

One or more aspects of embodiments of the present disclosure are directed toward a positive electrode active material having desirable large energy density, increased operating voltage, and/or high conductivity, a method of manufacturing the positive electrode active material, and a positive electrode active material slurry including the positive electrode active material.

One or more aspects of embodiments of the present disclosure are directed toward a rechargeable lithium battery having desirable large energy density, increased operating voltage, high charge-discharge efficiency, excellent or suitable low-temperature characteristics, and/or long lifetime.

According to one or more embodiments of the present disclosure, a method of manufacturing a positive electrode active material may include: forming a mixture by mixing an iron phosphate precursor, a lithium source, a carbon source, and a dopant source with each other; performing a spray drying to dry the mixture; and performing a calcination on the dried mixture. The dopant source may include a titanium compound.

According to one or more embodiments of the present disclosure, a method of manufacturing a positive electrode active material may include: forming a mixture by mixing an iron phosphate precursor, a lithium source, a carbon source, and a dopant source with each other; performing a spray drying to dry the mixture; and performing a calcination on the dried mixture. The dopant source may include at least one selected from an aluminum compound, a titanium compound, a vanadium compound, and a magnesium compound.

According to one or more embodiments of the present disclosure, a positive electrode active material includes a first particle that includes a compound represented by Chemical Formula 1 and has a first average particle diameter. The first particle has a form (e.g., in a form of a secondary particle) in which second particles (e.g., in a form of primary particles) are aggregated (e.g., agglomerated) with each other. The second particles have a second average particle diameter less than the first average particle diameter.

$$[\text{Chemical Formula 1}] \qquad Li_{a1}Fe_{x1}By_1PO_{4-b1}$$

In Chemical Formula 1, $0.8 \leq a1 \leq 1.2$, $0.950 \leq x1 \leq 0.999$, $0.001 \leq y1 \leq 0.05$, $0 \leq b1 \leq 0.05$, and $x1+y1=1$.

In Chemical Formula 1, B is at least one element selected from among Al, Ti, V, and Mg.

According to one or more embodiments of the present disclosure, a positive electrode active material slurry may include a positive electrode active material, a conductive material, a binder, and a solvent. There may be presence of solid content in an amount of about 60 wt% to about 70 wt%. In some embodiments, the positive electrode active material slurry may include a solid content in an amount of about 60 wt% to about 70 wt%.

According to one or more embodiments of the present disclosure, a rechargeable lithium battery may include a positive electrode, a negative electrode, a separator, and an electrolyte. The positive electrode may include a positive electrode active material. A ratio (e.g., percentage amount) of a discharge capacity at -20 °C to an initial discharge capacity may be equal to or greater than about 40%.

At least some of the above and other features of the invention are set out in the claims.

Additional aspects will be set forth in part in the description which follows and, in part, will be apparent from the description, or may be learned by practice of the presented embodiments of the disclosure.

## BRIEF DESCRIPTION OF DRAWINGS

The above and other aspects, features, and advantages of certain embodiments of the present disclosure will be more apparent from the following description taken in conjunction with the accompanying drawings.

FIG. 1 illustrates a simplified conceptual diagram showing a rechargeable lithium battery according to one or more embodiments of the present disclosure.

FIGS. 2 to 5 each illustrates a simplified diagram showing a rechargeable lithium battery according to one or more embodiments of the present disclosure, FIG. 2 showing a cylindrical battery, FIG. 3 showing a prismatic battery, and FIGS. 4 and 5 each showing a pouch-type or kind battery.

FIG. 6 illustrates an enlarged view showing a positive electrode active material layer of a rechargeable lithium battery according to one or more embodiments of the present disclosure.

FIG. 7 illustrates a flow chart showing a method of manufacturing a positive electrode active material according to one or more embodiments of the present disclosure.

FIG. 8 illustrates an enlarged view showing a positive electrode active material layer of a rechargeable lithium battery according to a comparative example of the present disclosure.

FIG. 9 illustrates a scanning electron microscope (SEM) image showing a positive electrode active material of Embodiment 1 according to the present disclosure.

FIG. 10 illustrates a SEM image showing a positive electrode active material of Comparative Example 1 according to the present disclosure.

## DETAILED DESCRIPTION

In order to sufficiently understand the configurations and aspects of the present disclosure, one or more embodiments of the present disclosure will be described with reference to the accompanying drawings. It should be noted, however, that the present disclosure is not limited to the following example embodiments and may be implemented in one or more suitable forms. Rather, the example embodiments are provided only to illustrate the present disclosure and let those skilled in the art fully know the scope of the present disclosure.

In the present disclosure, it will be understood that, if (e.g., when) an element is referred to as being on another element, the element may be directly on the other element or intervening elements may be present therebetween. In contrast, if (e.g., when) an element is referred to as being "directly on" another element, there are no intervening elements present. In the drawings, thicknesses of some components may be exaggerated for effectively explaining the technical contents. Like reference numerals refer to like elements throughout the present disclosure, and duplicative descriptions thereof may not be provided for conciseness.

Unless otherwise especially noted in the present disclosure, the singular forms, "a," "an," and "the," are intended to include the plural forms as well, unless the context clearly indicates otherwise. Further, the utilization of "may" when describing embodiments of the present disclosure refers to "one or more embodiments of the present disclosure." In addition, unless otherwise especially noted, the phrase, "A or B," "A and/or B," or "A/B," may indicate "A but not B," "B but not A," and "A and B". The terms, "comprises/includes" and/or "comprising/including," used in the present disclosure do not exclude the presence or addition of one or more other components.

As used herein, the term, "combination thereof," may refer to a mixture, a stack, a composite, a copolymer, an alloy, a blend, or a reaction product of the constituents.

Unless otherwise especially defined in the present disclosure, a particle diameter may be an average particle diameter. In addition, a particle diameter may indicate an average particle diameter ($D_{50}$) where a cumulative volume is about 50 volume% in a particle size distribution. The average particle diameter ($D_{50}$) may be measured by a method widely suitable to those skilled in the art, for example, by a particle size analyzer, for example, HORIBA, LA-950 laser particle size analyzer, a transmission electron microscope (TEM), or a scanning electron microscope (SEM). In some embodiments, a dynamic light scattering (DLS) measurement device is used to perform a data analysis, the number of particles is counted for each particle size range, and then from the data, an average particle diameter ($D_{50}$) value may be obtained through a calculation. In some embodiments, a laser scattering method may be utilized to measure the average particle diameter

($D_{50}$). In the laser scattering method, target particles are distributed in a dispersion solvent, introduced into a laser scattering particle measurement device (e.g., MT3000 commercially available from Microtrac, Inc.), irradiated with ultrasonic waves of 28 kHz at a power of 60 W, and then an average particle diameter ($D_{50}$) is calculated in the 50% standard of particle diameter distribution in the measurement device. $D_{50}$ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, the term, "diameter," indicates an average particle diameter, and when the particles are non-spherical, the term, "diameter," indicates a major axis length.

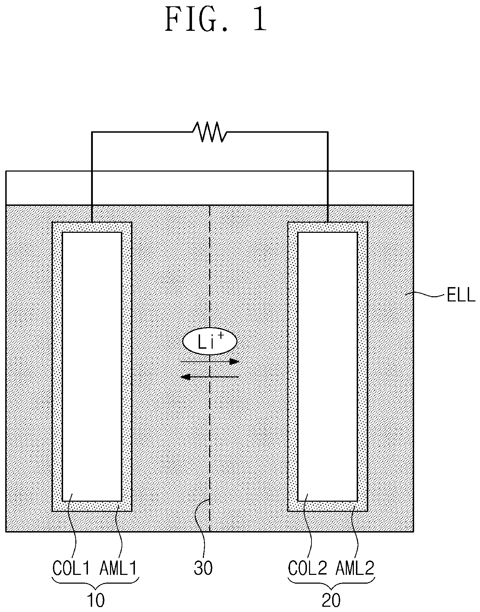

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged between the positive electrode 10 and the negative electrode 20. The positive electrode 10, the negative electrode 20, and the separator 30 may be in contact with the electrolyte ELL. In some embodiments, the positive electrode 10, the negative electrode 20, and the separator 30 may be impregnated in and/or with the electrolyte ELL.

The electrolyte ELL may be a medium through which lithium ions are migrated and transferred between the positive electrode 10 and the negative electrode 20. In the electrolyte ELL, the lithium ions may move through the separator 30 toward one of (e.g., selected from among) the positive electrode 10 and the negative electrode 20.

## Positive Electrode 10

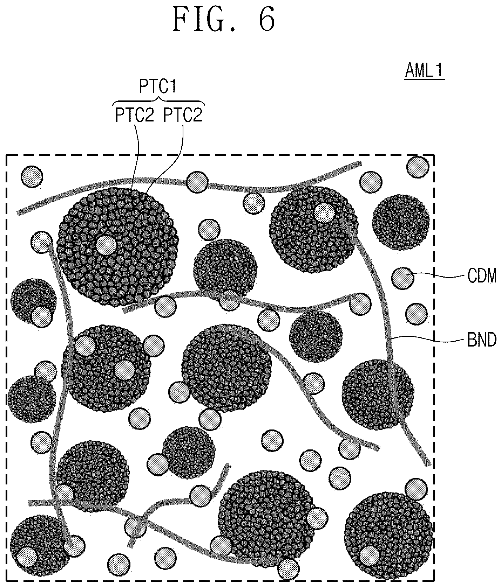

The positive electrode 10 for a rechargeable lithium battery may include a current collector COL1 and a positive electrode active material layer AML1 formed on the current collector COL1. The positive electrode active material layer AML1 may include a positive electrode active material (e.g., in a form of particles) and may further include a binder and/or a conductive material (e.g., electron conductor). With reference to FIG. 6, the following will describe in more detail the positive electrode active material layer AML1 according to one or more embodiments of the present disclosure. Aluminium (Al) may be used as the current collector COL1, but embodiments of the present disclosure are not limited thereto.

## Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material (e.g., in a form of particles) and may further include a binder and/or a conductive material (e.g., electron conductor).

For example, in some embodiments, the negative electrode active material layer AML2 may include a negative electrode active material of about 90 wt% to about 99 wt%, a binder of about 0.5 wt% to about 5 wt%, and a conductive material of about 0 wt% to about 5 wt%, based on 100 wt% of a total weight of the negative electrode active material layer AML2.

The binder may serve to improve attachment of negative electrode active material particles to each other and also to improve attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, and/or a (e.g., any suitable) combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

If (e.g., when) an aqueous binder is used as the binder of the negative electrode, a cellulose-based compound capable of providing a viscosity may further be included. The cellulose-based compound may include one or more of (e.g., selected from among) carboxymethyl cellulose, hydroxypropyl methylcellulose, methyl cellulose, and alkali metal salts thereof. The alkali metal may include Na, K, or Li.

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The conductive material (e.g., electrically or electron conductive material) may be used to provide an electrode with conductivity, and any suitable conductive material without causing chemical change of a battery may be used as the conductive material to constitute the battery. For example, in some embodiments, the conductive material may include a carbon-based material, such as natural graphite, artificial graphite, carbon black, acetylene black, Ketjen black, carbon fiber, carbon nanofiber, and/or carbon nanotube; a metal powder or metal fiber including one or more of (e.g., selected from among) copper, nickel, aluminium, and silver; a conductive polymer, such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

**Negative Electrode Active Material**

The negative electrode active material in the negative electrode active material layer AML2 may include a material that may reversibly intercalate and deintercalate lithium ions, lithium metal, a lithium metal alloy, a material that may dope and de-dope lithium, or a transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite, such as non-shaped (e.g., irregularly shaped), sheet-shaped, flake-shaped, sphere-shaped, or fiber-shaped natural graphite and/or artificial graphite, and the amorphous carbon may include soft carbon, hard carbon, mesophase pitch carbon, and/or calcined coke.

The lithium metal alloy may include an alloy of lithium and a metal that is selected from among sodium (Na), potassium (K), rubidium (Rb), cesium (Cs), francium (Fr), beryllium (Be), magnesium (Mg), calcium (Ca), strontium (Sr), silicon (Si), antimony (Sb), lead (Pb), indium (In), zinc (Zn), barium (Ba), radium (Ra), germanium (Ge), aluminium (Al), and tin (Sn).

The material that may dope and de-dope lithium may include a Si-based negative electrode active material or a Sn-based negative electrode active material. The Si-based negative electrode active material may include silicon, a silicon-carbon composite, $SiO_x$ (where $0<x\leq2$), Si-Q alloy (where Q is an alkali metal, an alkaline earth metal, a Group 13 element, a Group 14 element (except for Si), a Group 15 element, a Group 16 element, a transition metal, a rare-earth element, and/or a (e.g., any suitable) combination thereof), and/or a (e.g., any suitable) combination thereof. The Sn-based negative electrode active material may include Sn, $SnO_k$ (where $0<k\leq2$) (e.g., $SnO_2$), a Sn-based alloy, and/or a (e.g., any suitable) combination thereof.

The silicon-carbon composite may be a composite of silicon and amorphous carbon (e.g., in a form of particles). According to one or more embodiments, the silicon-carbon composite may have a structure in which the amorphous carbon is coated on a surface of each of silicon particles. For example, in some embodiments, the silicon-carbon composite may include a secondary particle (core) in which primary silicon particles are assembled, and an amorphous carbon coating layer (shell) on (e.g., positioned on) a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

**Separator 30**

Based on type or kind of the rechargeable lithium battery, the separator 30 may be present between the positive electrode 10 and the negative electrode 20. The separator 30 may include one or more of (e.g., selected from among) polyethylene, polypropylene, polyvinylidene fluoride, and/or a (e.g., any suitable) combination thereof, or may have a multi-layered separator thereof, such as a polyethylene/polypropylene bi-layered separator, a polyethylene/polypropylene/polyethylene tri-layered separator, or a polypropylene/polyethylene/polypropylene tri-layered separator.

The separator 30 may include a porous substrate and a coating layer positioned on a surface (e.g., one surface or two opposite surfaces) of the porous substrate, and the coating layer may include an organic material, an inorganic material, and/or a (e.g., any suitable) combination thereof.

The porous substrate may be a polymer layer including one selected from among polyolefin, such as polyethylene and polypropylene, polyester, such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenyleneoxide, a cyclic olefin copolymer, polyphenylenesulphide, polyethylene naphthalate, a glass fiber, and polytetrafluoroethylene (e.g., Teflon™), or may be a copolymer or mixture including two or more of thereof.

The organic material may include a polyvinylidene fluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but embodiments of the present disclosure are not limited thereto.

The organic material and the inorganic material may be present mixed in one coating layer or may be present as a stack of a coating layer including the organic material and a coating layer including an inorganic material.

## Electrolyte ELL

The electrolyte ELL for the rechargeable lithium battery may include a non-aqueous organic solvent, a lithium salt, and an additive.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethyl methyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include nitriles, such as R-CN (where R is a hydrocarbon group having a C2 to C20 linear, branched, or cyclic structure and may include a double bond, an aromatic ring, or an ether group); amides, such as dimethylformamide; dioxolanes, such as 1,3-dioxolane and/or 1,4-dioxolane; and/or sulfolanes.

The non-aqueous organic solvent may be used alone or in a mixture of two or more thereof.

In some embodiments, if (e.g., when) a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a rechargeable lithium battery and plays a role in enabling a basic operation of the rechargeable lithium battery and in promoting the movement of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

## Rechargeable Lithium Battery

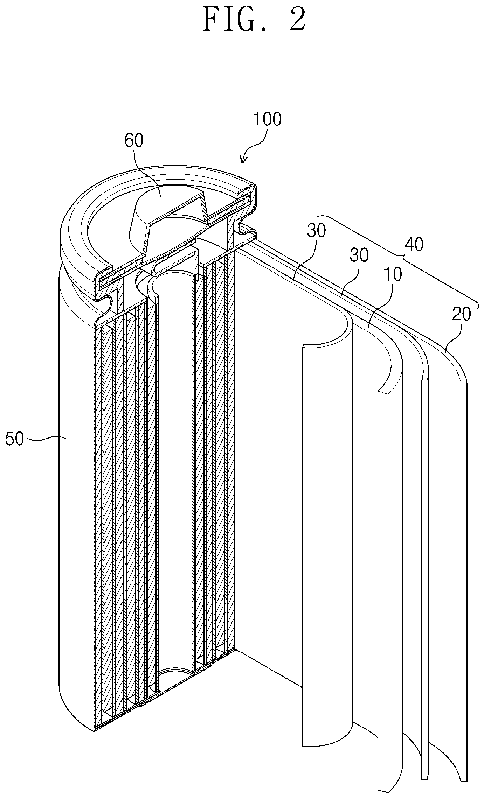

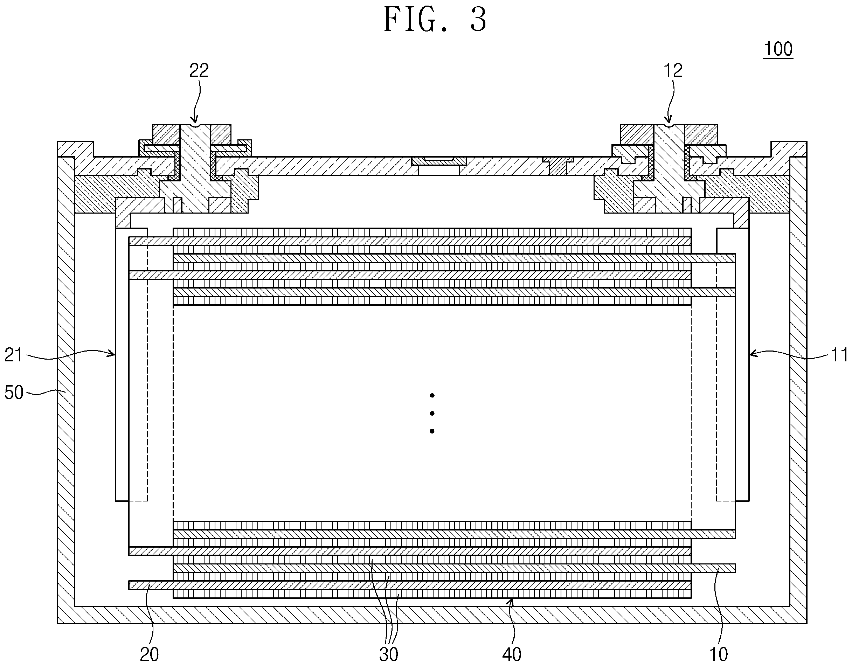

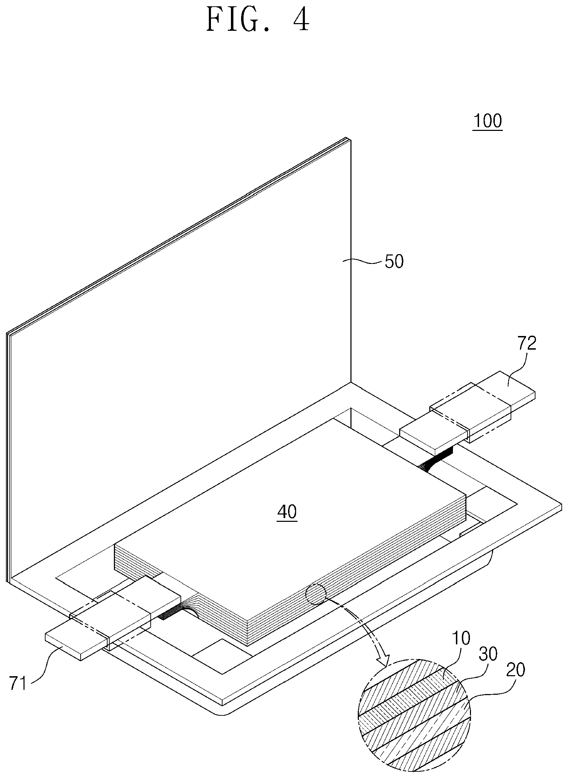

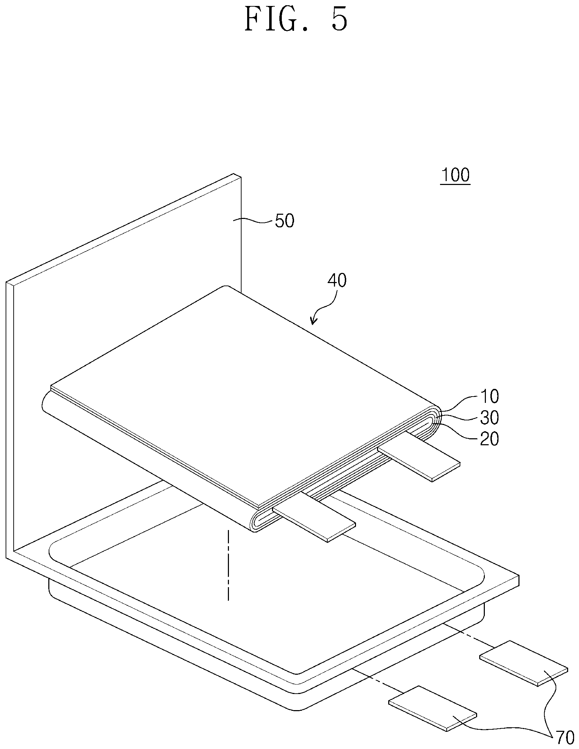

Based on the shape of a rechargeable lithium battery, the rechargeable lithium battery may be classified into cylindrical, prismatic, pouch, or coin type (kind). FIGS. 2 to 5 each illustrates a simplified diagram showing a rechargeable lithium battery according to one or more embodiments of the present disclosure, FIG. 2 showing a cylindrical battery, FIG. 3 showing a prismatic battery, and FIGS. 4 and 5 each showing a pouch-type or kind battery. Referring to FIGS. 2 to 5, a rechargeable lithium battery 100 may include an electrode assembly 40 in which a separator 30 is interposed between a positive electrode 10 and a negative electrode 20 and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In some embodiments, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, which serves as an electrical path for externally inducing a current generated in the electrode assembly 40.

A rechargeable lithium battery according to one or more embodiments of the present disclosure may be applied to automotive vehicles, mobile phones, and/or any other suitable electrical devices, but embodiments of the present disclosure are not limited thereto.

FIG. 6 illustrates an enlarged view showing a positive electrode active material layer of a rechargeable lithium battery according to one or more embodiments of the present disclosure. Referring to FIG. 6, as described in one or more embodiments of the present disclosure, the positive electrode active material layer (see AML1 of FIG. 1) may include a first particle PTC1, a conductive material CDM, and a binder BND. A plurality of first particles PTC1 constitute a positive electrode active material according to one or more embodiments of the present disclosure.

The positive electrode active material layer AML1 may further include an additive that may serve as a sacrificial positive electrode.

An amount of the positive electrode active material PTC1 in the positive electrode active material layer AML1 may range from about 90 wt% to about 99 wt% relative to 100 wt% of the positive electrode active material layer AML1. Amounts of the binder BND and the conductive material CDM may be about 0.5 wt% to about 5 wt% relative to 100 wt% of the positive electrode active material layer AML1.

The binder BND may bond the first particle PTC1 and the conductive material CDM to each other. For example, the binder BND may include at least one selected from among polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but embodiments of the present disclosure are not limited thereto.

The conductive material CDM (e.g., an electrically or electron conductive material) may be used to improve conductivity of the positive electrode active material layer AML1. Any suitable conductive material that does not cause a chemical change of the positive electrode active material layer AML1 may be used without limitation as the conductive material CDM. For example, the conductive material CDM may include a carbon-based material, such as natural graphite, artificial graphite, carbon black, acetylene black, Ketjen black, carbon fiber, carbon nanofiber, and carbon nanotube; a metal powder or metal fiber containing one or more of (e.g., selected from among) copper, nickel, aluminium, silver, and/or a (e.g., any suitable) mixture thereof; a conductive polymer, such as a polyphenylene derivative; and/or a (e.g., any suitable) mixture thereof.

The first particle PTC1 will be discussed in more detail.

**First Particle PTC1**

The first particle PTC1 has a polycrystalline shape and includes a secondary particle in which at least two primary particles are aggregated (e.g., agglomerated). For example, a single first particle PTC1 (e.g., in a form of secondary particle) includes a plurality of second particles (e.g., in a form of primary particles) PTC2 that are aggregated (e.g., agglomerated) with each other. Each of the second particles PTC2 may be a primary particle.

The first particle PTC1 has a first average particle diameter. The first average particle diameter of the first particle PTC1 may range from about 2 $\mu$m to about 15 $\mu$m, from about 3 $\mu$m to about 10 $\mu$m, or from about 3 $\mu$m to about 7 $\mu$m. For example, the first average particle diameter of the first particle PTC1 may be about 5 $\mu$m. In one or more embodiments, the average particle diameter may be measured by a particle size analyzer. An average particle diameter may refer to a diameter ($D_{50}$) of particles having a cumulative volume of 50 vol% in particle size distribution.

A maximum particle diameter ($D_{max}$) of the first particle PTC1 may be equal to or greater than about 10 $\mu$m or equal to or greater than about 15 $\mu$m.

The second particle PTC2 has a second average particle diameter. The second average particle diameter is less than the first average particle diameter. The second average particle diameter of the second particle PTC2 may be equal to or less than about 200 nm. For example, the second average particle diameter of the second particle PTC2 may range from about 10 nm to about 200 nm, from about 20 nm to about 200 nm, from about 50 nm to about 200 nm, or from about 100 nm to about 200 nm. In one or more embodiments, the second average particle diameter may refer to a diameter obtained by measuring 30 or more second particles PTC2 randomly selected from among electron microscope images of a positive electrode active material. The second particle PTC2 may have a substantially uniform second average particle diameter.

If (e.g., when) the first particle PTC1 and the second particle PTC2 have their particle diameter within the ranges above, and if (e.g., when) the second particle PTC2 has a substantially uniform size, a rechargeable lithium battery including the first particle PTC1 and the second particle PTC2 may improve the charge-discharge capacity and low-temperature capacity.

The first particle PTC1 may include an olivine-based lithium compound represented by Chemical Formula 1.

[Chemical Formula 1] $\quad$ $Li_{a1}Fe_{x1}By_1PO_{4-b1}$

**EP 4 641 688 A1**

In Chemical Formula 1, a1, b1, x1, and y1 satisfy 0.8≤a1≤1.2, 0.950≤x1≤0.999, 0.001≤y1≤0.05, 0≤b1≤0.05, and x1+y1=1. B is at least one element selected from among Al, Ti, V, and Mg. For example, B may include Ti. B may be a dopant doped in the first particle PTC1. B may control to allow a primary particle, or the second particle PTC2 to have a substantially uniform size. In one or more embodiments, in Chemical Formula 1, a1, b1, x1, and y1 may satisfy 0.8≤a1≤1.2, 0.996≤x1≤0.999, 0.001≤y1≤0.004, 0≤b1≤0.05, and x1+y1=1.

A doping amount of B may range from about 500 ppm to about 3,000 ppm. The doping amount of B may be defined to refer to a weight of doping element B relative to the total weight of metals (e.g., Fe and B) except for lithium of the olivine-based lithium compound represented by Chemical Formula 1 as described in one or more embodiments of the present disclosure. If (e.g., when) the doping amount of B satisfies the range above, the second particle PTC2 may be controlled or selected to have a substantially uniform size.

In some embodiments, the first particle PTC1 may include a coating layer on a surface thereof. The coating layer may cover an entirety or a portion of the surface of the first particle PTC1. For example, the coating layer may include carbon and/or a carbon-containing compound. The coating layer may cause the first particle PTC1 to have an improved structural stability and increased electric conductivity.

The coating layer may further include at least one selected from among a titanium-containing compound, a magnesium-based compound, and a vanadium-containing compound. A metal-containing compound, such as a titanium-containing compound, a magnesium-based compound, and a vanadium-containing compound, may be metal oxide, metal hydroxide, metal carbonate, and/or a (e.g., any suitable) composite or mixture thereof. The metal-containing compound may further include other metal or non-metal elements. For example, the metal-containing compound may further include lithium.

In some embodiments, the first particle PTC1 may further include a grain boundary coating layer on a surface of each of the second particles PTC2. The grain boundary coating layer may be present within the first particle PTC1. The grain boundary coating layer may be coated along an interface between the second particles PTC2 within the first particle PTC1. For example, the grain boundary coating layer may indicate a material coated on a grain boundary within the first particle PTC1. The coating layer may include carbon and/or a carbon-containing compound. The grain boundary coating layer may further include at least one selected from among a titanium-containing compound, a magnesium-based compound, and/or a vanadium-containing compound.

An interior of the first particle PTC1 may indicate an entire inner portion except for the surface of the first particle PTC1. For example, the interior of the first particle PTC1 may refer to an entire inside from an outer surface of the first particle PTC1 to a depth of about 10 nm, or a portion from a depth of about 10 nm to a depth of about 2 μm.

As the first particle PTC1 may further include a grain boundary coating part, a structural stability may be reinforced, and a substantially uniform coating layer may be formed on the surface of the first particle PTC1. In some embodiments, as the first particle PTC1 may further include a grain boundary coating part, the first particle PTC1 may have an excellent or suitable electric conductivity.

The first particle PTC1 may further include carbon originated from the coating layer and/or the grain boundary coating layer. In some embodiments, the first particle PTC1 may further include carbon from the coating layer and/or from the grain boundary coating layer. The carbon in the first particle PTC1 may have an amount of about 0.5 wt% to about 10 wt%, about 1 wt% to about 3 wt%, or about 1.5 wt% to about 2.5 wt%.

The first particle PTC1 may have a spherical shape in which nano-sized second particles PTC2 are aggregated (e.g., agglomerated). As the first particle PTC1 may be constituted by the second particles PTC2 that are closely aggregated (e.g., agglomerated) with each other, the first particle PTC1 may exhibit the following properties. The first particle PTC1 may have a spherical or oval shape. The first particle PTC1 may have an average particle diameter ($D_{50}$) of about 2 μm to about 15 μm. The first particle PTC1 may have porosity of about 20% to about 40%. A span value of the first particle PTC1 analyzed with a particle size analyzer may range from about 0.3 to about 0.75. In this context, span is a value that indicates the distribution of particle sizes. It is calculated using the formula:

$$\text{Span} = \frac{D_{90} - D_{10}}{D_{50}}$$

Where $D_{90}$, $D_{10}$, and $D_{50}$ are specific percentiles of the particle size distribution. Here, porosity (n) may be defined as the pore volume (Vp) divided by the total volume (Vt) of a particle, or $n = \frac{V_p}{V_t}$ .

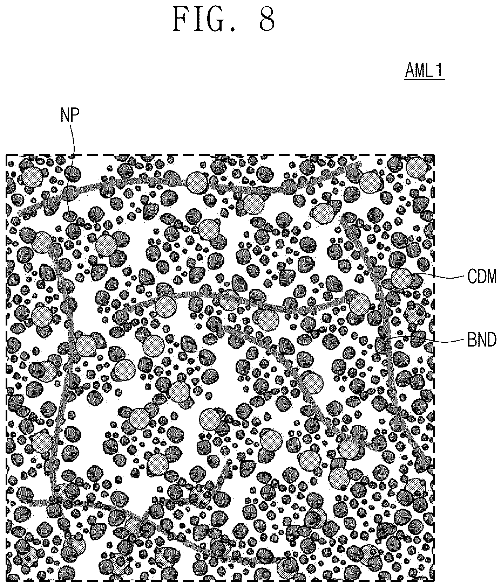

According to a comparative example of the present disclosure, the positive electrode active material layer AML1 may include nano-type or kind positive electrode active material, a nano-type or kind positive electrode active material may include fine-sized particles NP. The particles **NP** may be aggregated (e.g., agglomerated) to allow the nano-type or kind positive electrode active material to have a particle shape similar to that of the first particle PTC1 as shown in FIG. 6. Even though the particles **NP** are aggregated (e.g., agglomerated), the nano-type or kind positive electrode active material may not have a spherical shape the same as or similar to that of the first particle PTC1 as shown in FIG. 8. For example, the nano-type or kind positive electrode active material may have a random shape. The nano-type or kind positive electrode active material may be provided in one or more suitable sizes. For example, the nano-type or kind positive electrode active material may have an average particle diameter of about 500 nm to about 2.5 $\mu$m, for example, an average particle diameter of about 1 $\mu$m. The nano-type or kind positive electrode active material may have a minimum particle diameter of about 100 nm to about 500 nm or about 200 nm to about 300 nm. In one or more embodiments, the average particle diameter ($D_{50}$) may be measured by a particle size analyzer. An average particle diameter may refer to a diameter of particles having a cumulative volume of 50 vol% in particle size distribution. For example, a minimum particle diameter may refer to a diameter obtained by measuring 30 or more primary particles (referred to as first primary particles) randomly selected from among electron microscope images of the nano-type or kind positive electrode active material. The first primary particle may have a particle diameter that is about 100 nm greater than the second average particle diameter of the second particle PTC2. The nano-type or kind positive electrode active material may have porosity of greater than about 40%. A span value of the nano-type or kind positive electrode active material analyzed with a particle size analyzer may deviate from a range of about 0.3 to about 0.75.

According to one or more embodiments of the present disclosure, an assembly-type or kind positive electrode active material includes the first particles PTC1 as described in one or more embodiments of the present disclosure. Unlike the aforementioned comparative example, the assembly-type or kind positive electrode active material may have the porosity and the span value that are described in one or more embodiments of the present disclosure.

As the positive electrode active material of the present disclosure includes the first particle PTC1, it may increase a pellet density, a capacity, and an energy density. In one or more embodiments, the positive electrode active material may have a pellet density of about 2.0 g/cc to about 3.0 g/cc. For example, the positive electrode active material may have a pellet density of about 2.4 g/cc to about 2.6 g/cc or about 2.41 g/cc to about 2.5 g/cc.

A rechargeable lithium battery including the positive electrode active material of the present disclosure may improve the low-temperature characteristics. In one or more embodiments, a ratio (e.g., percentage amount) of a discharge capacity at -20 °C to an initial discharge capacity of the rechargeable lithium battery may be equal to or greater than about 40%. For example, a ratio (e.g., percentage amount) of a discharge capacity at -20 °C to an initial discharge capacity of the rechargeable lithium battery may range from about 45% to about 70% or from about 50% to about 65%. In the present context, the ratio of the discharge capacity at -20 °C to the initial discharge capacity being equal to or greater than about 40% refers to:

**Discharge Capacity at -20 °C:** This is the amount of energy the battery can deliver when it is discharged at a temperature of -20 °C.

**Initial Discharge Capacity:** This is the amount of energy the battery can deliver when it is first used, typically measured at a standard temperature (often around 25 °C).

The ratio is calculated as follows:

$$Ratio = \frac{\text{Discharge Capacity at} -20°C}{\text{Initial Discharge Capacity}}$$

A rechargeable lithium battery including the positive electrode active material of the present disclosure may have an improved operating voltage. In one or more embodiments, a rechargeable lithium battery of the present disclosure may have an operating voltage in a range of about 3 V to about 5 V. For example, the operating voltage may range from about 3 V to about 4.5 V or from about 3.5 V to about 4 V.

A rechargeable lithium battery including the positive electrode active material of the present disclosure may improve the lifetime characteristics. In one or more embodiments, a rechargeable lithium battery of the present disclosure may have a capacity retention rate of equal to or greater than about 99% after 50 times of charge-discharge with a constant current of 1.0 C at the aforementioned voltage. For example, the capacity retention rate may range from about 99% to about 100% or from about 99.1% to about 100%.

**Positive Electrode Active Material Slurry**

A positive electrode active material slurry according to one or more embodiments of the present disclosure may include the positive electrode active material PTC1, the conductive material CDM, the binder BND, and a solvent. In the following disclosure, a description of components the same as those discussed with reference to FIG. 6 may not be repeated here, and a difference thereof will be discussed in more detail.

In one or more embodiments, the positive electrode active material slurry may have a viscosity of equal to or less than about 7,000 mPa·s. For example, the viscosity of the positive electrode active material slurry may range from about 1,000 mPa·s to about 7,000 mPa·s, from about 2,000 mPa·s to about 6,000 mPa·s, or from about 3,000 mPa·s to about 4,000 mPa·s. If (e.g., when) the viscosity of the positive electrode active material slurry satisfies the range above, the positive electrode active material layer AML1 may be favorably attached to the current collector COL1.

The positive electrode active material slurry of the present disclosure may achieve a target viscosity while including a large solid content (e.g., amount). For example, the positive electrode active material slurry may include a solid content (e.g., amount) of about 60 wt% to about 70 wt%. The solid content (e.g., amount) may refer to the weight percentage of a solid material (or a dried mixture and current collector) remaining after the evaporation of a solvent relative to the total weight of a current collector coated with the positive electrode active material slurry if (e.g., when) an electrode is manufactured. The solid may include a positive electrode active material, a binder, and a conductive material. If (e.g., when) the solid content (e.g., amount) satisfies the range above, the first particle PTC1 may have an excellent or suitable binding force to an electrode current collector.

The first particle PTC1 may be attached to the current collector (see COL1 of FIG. 1), and the binder BND may increase a binding force between the first particle PTC1 and the current collector (see COL1 of FIG. 1). For example, if (e.g., when) a full cell is fabricated, the positive electrode active material slurry of the present disclosure may include a small amount of the binder BND. As the first particle PTC1 may have a large first average particle diameter, in order to secure a target binding force between the first particle PTC1 and the current collector (see COL1 of FIG. 1) if (e.g., when) a full cell is fabricated, the binder BND in the positive electrode active material layer AML1 may have a reduced amount. For example, the positive electrode active material slurry may include the binder BND whose amount is in a range of about 0.5 wt% to about 5 wt% relative to the total weight of the positive electrode active material slurry. For example, the amount of the binder BND may range from about 0.5 wt% to about 3 wt% or from about 0.5 wt% to about 2 wt% relative to 100 wt% of the positive electrode active material layer AML1. In some embodiments, a rechargeable lithium battery including the positive electrode active material may decrease in resistance.

**Manufacture of Positive Electrode Active Material**

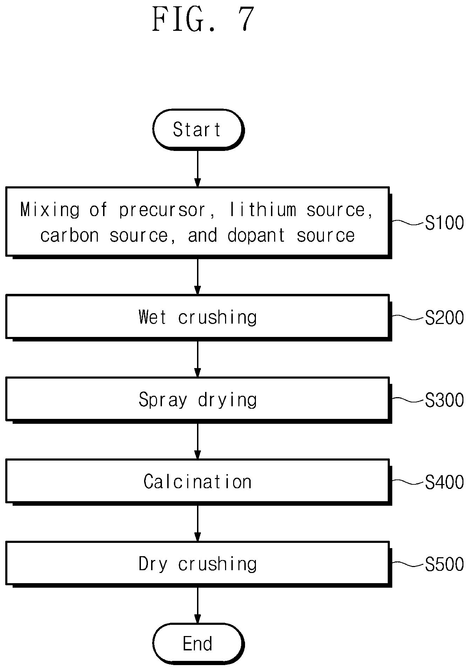

FIG. 7 illustrates a flow chart showing a method of manufacturing a positive electrode active material according to one or more embodiments of the present disclosure.

Referring to FIG. 7, an iron phosphate precursor, a lithium source, a carbon source, and a dopant source may be added to and mixed in a solvent (S100). For example, the solvent may be water or ethanol. The iron phosphate precursor may be a compound containing all of iron (Fe) and phosphorus (P), and/or a (e.g., any suitable) mixture of a compound containing iron (Fe) and a compound containing phosphorus (P). For example, the iron phosphate precursor may include $FePO_4 \cdot H_2O$ and/or a mixture of $FeSO_4$ and $H_3PO_4$. For example, the iron phosphate precursor may include $FePO_4$ and/or a mixture of $FeSO_4$ and $H_3PO_4$.

The lithium source may include at least one selected from among lithium oxide, lithium hydroxide, lithium chloride, lithium nitrate, lithium nitrite, lithium formate, lithium acetate, lithium oxalate, lithium carbonate, lithium phosphate, lithium hydrogen phosphate, lithium dihydrogen phosphate, and lithium citrate.

The carbon source may include at least one selected from among glucose, sucrose, fructose, cellulose, starch, citric acid, polyacrylic acid, polyethylene glycol, and dopamine.

The dopant source may include oxide containing dopant metal and/or chloride containing dopant metal. The dopant source may include a titanium compound. For example, the dopant source may include at least one selected from among titanium oxide and titanium chloride. The dopant source may further include, in addition to the titanium compound, at least one selected from among aluminium oxide, aluminium chloride, magnesium oxide, magnesium chloride, vanadium oxide, and vanadium chloride. The dopant source may include at least one selected from an aluminium compound, a titanium compound, a vanadium compound, and a magnesium compound. In some embodiments, the dopant source may further include at least one selected from among titanium oxide, titanium chloride, aluminium oxide, aluminium chloride, magnesium oxide, magnesium chloride, vanadium oxide, and vanadium chloride.

The mixture may be wet-crushed (S200). The wet crushing may use an ordinary wet mill capable of controlling temperatures. For example, the wet crushing may use at least one selected from among a beads mill, a ball mill, an attrition mill, an apex mill, a super mill, and a basket mill. During the wet crushing process, particles in the mixture may be crushed to fine sizes.

In one or more embodiments of the present disclosure, the wet crushing (S200) may not be provided. For example, the wet crushing (S200) performed on precursor particles may not be provided to maximize or increase an average particle diameter of a first particle PTC1 which may be eventually prepared.

A solvent may be removed from the mixture to form a dried mixture. In one or more embodiments of the present disclosure, the formation of the dried mixture may include performing a spray drying on the mixture (S300). The spray drying may use a spray drying apparatus that is generally used or generally available. For example, the spray drying may use at least one selected from among an ultrasonic spray drying apparatus, an air nozzle spray drying apparatus, an ultrasonic nozzle spray drying apparatus, a filter expansion drop generation apparatus, and an electrostatic spray drying apparatus.

The particles, which have been reduced to primary particle size through the wet crushing process, may be aggregated (e.g., agglomerated) during the spray drying process to form a secondary particle. Thus, a flow rate and velocity of carrier gas, temperature, and residence time and internal pressure in a reactor may be adjusted during the spray drying process to form a first particle PTC1 in the shape of a secondary particle having a target size.

In one or more embodiments, the mixture targeted for the spray drying may have a solid content (e.g., amount) (or a total solid content (e.g., amount)) in a range of about 20 wt% to about 40 wt%. The solid content (e.g., amount) (or the total solid content (e.g., amount)) may refer to the weight percentage of a solid material (e.g., a dried mixture) remaining after the evaporation of a solvent relative to the total weight of a mixture (e.g., a spray solution). For example, the spray solution may have a solid content (e.g., amount) of about 30 wt%.

If (e.g., when) the solid content (e.g., amount) is less than about 20%, the first particle PTC1 may have a reduced average particle diameter and productivity may decrease. If (e.g., when) the solid content (e.g., amount) is greater than about 40%, the first particle PTC1 may have a difficulty in adjusting its average particle diameter and have a large size deviation.

The spray solution according to one or more embodiments of the present disclosure may have a viscosity of about 1,500 mPa·s to about 2,500 mPa·s at the aforementioned solid content (e.g., amount). For example, the spray solution may have a viscosity of about 2,000 mPa·s.

In one or more embodiments, a feed rate of the spray drying may range from about 0.1 kg/min to about 0.9 kg/min. A feed rate of the spray drying may refer to the weight of a mixture of solvent and raw material fed per hour. In one or more embodiments, the spray drying according to the present disclosure may have a feed rate of about 0.3 kg/min to about 0.8 kg/min or a feed rate of about 0.5 kg/min.

In one or more embodiments, the spray drying may be performed at a temperature of about 100 °C to about 300 °C. For example, the spray drying may be performed at a temperature in a range of about 200 °C to about 300 °C, from greater than about 200 °C to about equal to or less than about 300 °C, or from about 230 °C to about 270 °C. A spray gas (e.g., air) used in the spray drying may be introduced at a first temperature and exhausted at a second temperature. For example, the first temperature may range from about 200 °C to about 250 °C. The second temperature may range from 80 °C to about 150 °C.

A feed pressure of the spray solution may range from about 0.3 MPa to about 0.7 MPa. For example, the feed pressure of the spray solution may be about 0.5 MPa.

If (e.g., when) the feed rate, the feed pressure, and the temperature of the spray drying satisfy the ranges above, the first particle PTC1 may have a spherical shape and a target porosity.

In one or more embodiments, the spray solution of the spray drying may have a flow rate of about 30 mL/min to about 80 mL/min. If (e.g., when) the flow rate is less than about 30 mL/min, there may be problems, such as nozzle clogging and productivity reduction. If (e.g., when) the flow rate is greater than about 80 mL/min, moisture may be condensed in a spray dryer and thus there may be problems, such as incomplete drying of the mixture.

The dried mixture may be calcined under an inert environment (S400). The inert environment may be a nitrogen environment and/or an argon environment. The calcination temperature may range from about 500 °C to about 1,000 °C or from about 600 °C to about 800 °C. The calcination process may be performed for about 4 hours to about 20 hours or about 6 hours to about 12 hours. The calcination of the dried mixture may form the first particle PTC1 including the compound represented by Chemical Formula 1 as described in one or more embodiments of the present disclosure.

After the calcination of the dried mixture (S400), a step (e.g., act or task) may be further included in which the calcined mixture is dry-crushed (S500). The calcined mixture may be crushed using an air jet mill. The calcined mixture may be crushed at a rotation speed of about 0 rpm to about 7,000 rpm. For example, the calcined mixture may be crushed at a rotation speed of about 4,000 rpm to about 7,000 rpm, about 4,000 rpm to about 6,000 rpm, or about 4,500 rpm to about 5,000 rpm. The crushing process after the calcination (S500) may be performed under a relatively mild condition. In one or more embodiments of the present disclosure, the dry crushing (S500) may not be provided. If (e.g., when) the rotation speed of the crushing step (e.g., act or task) S500 satisfies the range above, the first particle PTC1 may maintain a secondary particle shape (e.g., a secondary particle form). Thus, the first particle PTC1 may have a secondary particle shape as shown in FIG. 6.

In a method of manufacturing the first particle PTC1 according to the present disclosure, the carbon source may be introduced into the iron phosphate precursor to uniformly (e.g., substantially uniformly) form a carbon coating layer on a surface of a primary particle. Afterwards, primary particles may be closely aggregated (e.g., agglomerated) through a spray drying to form a dense spherical secondary particle. In some embodiments, the first particle PTC1 may include a stable carbon coating layer outside and inside the first particle PTC1, and thus may have a relatively large amount of carbon. The large carbon amount of the first particle PTC1 may improve conductivity of the positive electrode active material layer AML1.

A carbon elementary analysis according to one or more embodiments of the present disclosure may be performed with an elemental analyzer (e.g., Elementar Micro Cube commercially available from Elementar Analysensysteme GmbH). A more detailed operating method and conditions may be as follows. 1 to 2 mg of a sample was weighed in a tin cup, and the sample was placed into an automatic sampling tray and fed into a combustion tube through a ball valve to be burned at a combustion temperature of 1,000 °C. Thereafter, reduced copper was used to reduce the combusted gas to form carbon dioxide. A TCD detector was utilized to detect the carbon dioxide.

In a method of measuring an amount of carbon according to one or more embodiments of the present disclosure, a scanning electron microscope-energy dispersive X-ray spectroscopy (SEM-EDS) may be performed on a particle surface, and a quantitative analysis executed to obtain the amount of carbon. Besides SEM-EDS, inductively coupled plasma mass spectrometry (ICP-MS) or inductively coupled plasma optical emission spectroscopy (ICP-OES) may be used to measure the amount of carbon.

The following will describe Embodiments and Comparative Examples of the present disclosure. The following Embodiments, however, are merely example, and embodiments of the present disclosure are not limited to the Embodiments discussed.

**Embodiment 1: Preparation of First Particle in the Form of Secondary Particle**

An iron phosphate precursor or $FePO_4$, lithium carbonate, and titanium dioxide were mixed in a molar ratio of Fe:Li:Ti of 1:1.03:0.002. 10 wt% of glucose was additionally fed into the mixture (S100). The slurry mixture was spray-dried and evaporated at a spray pressure of 0.5 MPa and a temperature of 250 °C (S300). In this step (e.g., act or task), a feed rate of the mixture was 0.5 kg/min. The dried mixture was calcined at 750 °C for 10 hours under a nitrogen environment to obtain a first particle in the form of a secondary particle (S400). An average size of second particles in the first particle was about 100 nm to about 200 nm. The calcined mixture was crushed with an air jet mill. A rotation speed was 5,000 rpm during the crushing. A doping amount of Ti was 1,000 ppm, and a chemical formula of the prepared first particle was $LiFe_{0.998}Ti_{0.002}PO_4$.

**Embodiment 2: Preparation of First Particle in the Form of Secondary Particle**

A first particle was prepared in substantially the same method as in Embodiment 1, except that titanium dioxide was replaced with aluminium oxide, a doping amount of aluminium (Al) was 1,000 ppm, and a chemical formula of the prepared first particle was $LiFe_{0.9965}Al_{0.0035}PO_4$.

**Embodiment 3: Preparation of First Particle in the Form of Secondary Particle**

A first particle was prepared in substantially the same method as in Embodiment 1, except that titanium dioxide was replaced with magnesium oxide, a doping amount of magnesium (Mg) was 1,000 ppm, and a chemical formula of the prepared first particle was $LiFe_{0.996}Mg_{0.004}PO_4$.

**Embodiment 4: Preparation of First Particle in the Form of Secondary Particle**

A first particle was prepared in substantially the same method as in Embodiment 1, except that titanium dioxide was replaced with vanadium oxide, a doping amount of vanadium (V) was 1,000 ppm, and a chemical formula of the prepared first particle was $LiFe_{0.998}V_{0.002}PO_4$.

**Comparative Example 1: Preparation of First Particle in the Form of Single Particle**

A first particle was prepared in substantially the same method as in Embodiment 1, except that a feed rate of the spray drying was 1.0 kg/min.

**Comparative Example 2: Preparation of First Particle in the Form of Single Particle**

A first particle was prepared in substantially the same method as in Embodiment 1, except that a feed rate of the spray drying was 1.0 kg/min, a temperature of the spray drying was 200 °C, and a rotation speed of the crushing was 8,000 rpm.

**Comparative Example 3: Preparation of First Particle in the Form of Single Particle**

A first particle was prepared in substantially the same method as in Embodiment 1, except that a feed rate of the spray drying was 2.0 kg/min and a rotation speed of the crushing was 8,000 rpm.

**Comparative Example 4: Preparation of First Particle in the Form of Single Particle**

A first particle was prepared in substantially the same method as in Embodiment 1, except that a feed rate of the spray drying was 2.0 kg/min, a temperature of the spray drying was 200 °C, and a rotation speed of the crushing was 8,000 rpm.

**Comparative Example 5: Preparation of First Particle in the Form of Single Particle**

A first particle was prepared in the form of a single particle (e.g., a monolithic particle, not in a secondary particle shape or form) in which no titanium is doped. The first particle was prepared in substantially the same method as in Embodiment 1, except that no titanium dioxide was included in preparing the mixture, a feed rate of the spray drying was 2.0 kg/min, a temperature of the spray drying was 200 °C, and a rotation speed of the crushing was 8,000 rpm.

**Comparative Example 6: Preparation of First Particle in the Form of Secondary Particle**

A first particle was prepared in substantially the same method as in Embodiment 1, except that an iron phosphate precursor or $FePO_4$, lithium carbonate, and titanium dioxide were mixed in a molar ratio of Fe:Li:Ti of 1:1.03:0.01, a doping amount of titanium (Ti) was 5,000 ppm, a chemical formula of the prepared first particle was $LiFe_{0.995}Ti_{0.005}PO_4$.

Table 1

| Category | Type/kind | Doping amount (ppm) | Manufacturing method | | |
|---|---|---|---|---|---|
| | | | Feed rate of spray drying | Temperatu re of spray drying | Crushing rotation speed |
| | | | (kg/min) | (□) | (rpm) |
| Embodiment 1 | secondary particle | Ti 1000 | 0.5 | 250 | 5000 |
| Embodiment 2 | secondary particle | Al 1000 | 0.5 | 250 | 5000 |
| Embodiment 3 | secondary particle | Mg 1000 | 0.5 | 250 | 5000 |
| Embodiment 4 | secondary particle | V 1000 | 0.5 | 250 | 5000 |
| Comparative Example 1 | single particle | Ti 1000 | 1.0 | 250 | 5000 |
| Comparative Example 2 | single particle | Ti 1000 | 1.0 | 200 | 8000 |
| Comparative Example 3 | single particle | Ti 1000 | 2.0 | 250 | 8000 |
| Comparative Example 4 | single particle | Ti 1000 | 2.0 | 200 | 8000 |
| Comparative Example 5 | single particle | - | 2.0 | 200 | 8000 |
| Comparative Example 6 | secondary particle | Ti 5000 | 0.5 | 250 | 5000 |

**Manufacture of Positive Electrode**

96 wt% of a final positive electrode active material, 2 wt% of polyvinylidene fluoride as a binder, and 2 wt% of carbon black as a conductive material were mixed in an N-methylpyrrolidone (NMP) solvent to prepare a positive electrode active material slurry. In Embodiments 1 to 4 and Comparative Example 6, the N-methylpyrrolidone solvent was added in an amount of 3 mL, and in Comparative Examples 1 to 5, the N-methylpyrrolidone solvent was added in an amount of 6 mL.
The positive electrode active material slurry was coated and dried on an aluminium current collector, and then pressed to manufacture a positive electrode.

**Fabrication of Rechargeable Lithium Battery**

A 2032-type or kind coin half-cell was manufactured using the manufactured positive electrode and a lithium metal counter electrode. A separator (having a thickness of about 16 μm) formed of a porous polyethylene (PE) film was interposed between the positive electrode and the lithium metal counter electrode, and an electrolyte was introduced to fabricate a rechargeable lithium battery. 1.3M $LiPF_6$ was mixed with a solvent including ethylene carbonate (EC), ethyl methyl carbonate (EMC), and dimethyl carbonate (DMC) mixed in a volume ratio of 3:4:3, and the mixture was used as the electrolyte.

**Evaluation 1: Analysis on Surface of Positive Electrode Active Material**

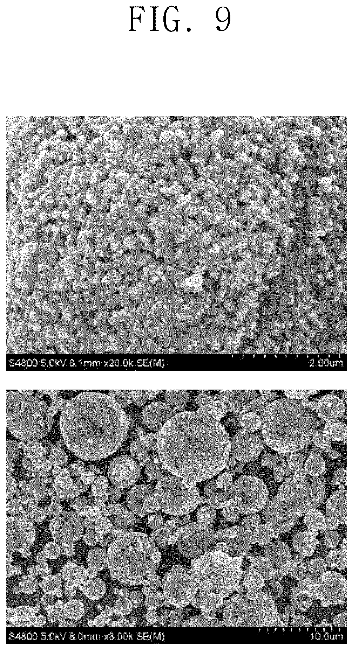

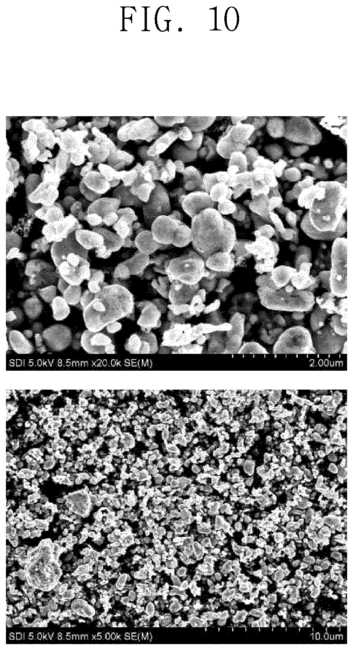

FIG. 9 shows an SEM image of the positive electrode active material prepared in Embodiment 1. FIG. 10 shows an SEM image of the positive electrode active material prepared in Comparative Example 1. A size of the primary particle was measured, and the result is listed in Table 2.

Table 2

| Category | Size of primary particle (nm) |
|---|---|
| Embodiment 1 | <200 |
| Embodiment 2 | <200 |
| Embodiment 3 | <200 |
| Embodiment 4 | <200 |
| Comparative Example 1 | >200 |
| Comparative Example 2 | >200 |
| Comparative Example 3 | >200 |
| Comparative Example 4 | >200 |
| Comparative Example 5 | >200 |
| Comparative Example 6 | <150 |

Referring to FIG. 9, it may be ascertained that a first particle according to one or more embodiments of the present disclosure is provided in the form of a secondary particle in which a plurality of primary particles are aggregated (e.g., agglomerated). Referring to FIG. 10, it may be observed that the first particle is provided in the form of a fine single particle. Referring to FIGS. 9 and 10 and Table 2, the primary particles PTC2 of Embodiments are smaller and more substantially uniform compared to the primary particles in Comparative Examples.

**Evaluation 2: Active Material**

A pellet density (PD) and a carbon amount of the positive electrode active materials of Embodiments 1 to 4 and Comparative Examples 1 to 6 were measured, and the results are listed in Table 3.

Table 3

| Category | Pellet density (g/cc) | Carbon amount (wt%) |
|---|---|---|
| Embodiment 1 | 2.46 | 1.81 |
| Embodiment 2 | 2.44 | 1.79 |
| Embodiment 3 | 2.44 | 1.80 |
| Embodiment 4 | 2.42 | 1.83 |
| Comparative Example 1 | 2.39 | 1.58 |
| Comparative Example 2 | 2.40 | 1.54 |
| Comparative Example 3 | 2.42 | 1.53 |
| Comparative Example 4 | 2.43 | 1.48 |
| Comparative Example 5 | 2.40 | 1.50 |
| Comparative Example 6 | 2.35 | 1.65 |

Referring to Table 3, it may be ascertained that the positive electrode active materials according to Embodiments 1 to 4 of the present disclosure each have a superior pellet density to that of the positive electrode active materials according to Comparative Examples 1 to 6. In addition, it may be ascertained that the positive electrode active materials according to Embodiments 1 to 4 of the present disclosure each have a larger carbon amount than that of the positive electrode active materials according to Comparative Examples 1 to 6.

The positive electrode active material according to Embodiment 1 has a pellet density and a carbon amount greater than those of the positive electrode active material according to Comparative Example 6.

**Evaluation 3: Battery Characteristics**

A viscosity of the positive electrode active material slurry that includes the positive electrode active material was measured in Embodiments 1 to 4 and Comparative Examples 1 to 6, and the results are listed in Table 4. Viscosity was measured at 25 °C using a Brookfield rotational viscometer.

Table 4

| Category | Viscosity (mPa·s) |
|---|---|
| Embodiment 1 | 4000 |
| Embodiment 2 | 3850 |
| Embodiment 3 | 4100 |
| Embodiment 4 | 3900 |
| Comparative Example 1 | 8500 |
| Comparative Example 2 | 10200 |
| Comparative Example 3 | 9300 |
| Comparative Example 4 | 8500 |
| Comparative Example 5 | 7500 |
| Comparative Example 6 | 5500 |

Referring to Table 4, the viscosity of the positive electrode active material slurry according to each of Embodiments 1 to 4 is 1.5 times to 3 times less than that of the positive electrode active material slurry according to Comparative Examples 1 to 5. In some embodiments, it may be ascertained that, when the positive electrode active material slurry is prepared to have a target viscosity, a larger amount of solid is included in each of Embodiments 1 to 4 than in Comparative Examples 1 to 5. In some embodiments, if (e.g. when) an electrode is manufactured using the positive electrode active material slurry according to one or more embodiments of the present disclosure, it may provide the positive electrode active material whose binding force is excellent or suitable.

**Evaluation 4: Battery Characteristics**

There were evaluated characteristics of the rechargeable lithium batteries fabricated using the positive electrode active materials of Embodiments 1 to 4 and Comparative Examples 1 to 6.

The rechargeable lithium batteries were initially charged under conditions of constant current (0.1C) and constant voltage (3.8 V) (cut-off 0.05C) at 25 °C, and after resting for 10 minutes, the rechargeable lithium batteries were initially discharged under conditions of constant current (0.1C) until a voltage reached 3.0 V, thereby obtaining the initial charge capacity (3.8 V charge capacity (mAh/g)) and the initial discharge capacity (3.8 V discharge capacity (mAh/g)), and the 3.8 V efficiency (%) is expressed as the initial discharge capacity/the initial charge capacity. Afterwards, a charge-discharge cycle was repeated 50 times at -20 °C with 1.0C/1.0C rate, and the 3.8 V lifetime (%, 50 cycles) is expressed as "the discharge capacity after 50 times of cycles/the initial charge capacity". In some embodiments, a coin cell was additionally manufactured and the batteries were initially charged at a constant current of 0.1 C and a constant voltage (3.8 V) (cut-off 0.05C), and after 10 minutes of rest, discharged up to 3.0 V at a constant current of 0.1 C, and measure a discharge capacity at -20 °C (-20 °C capacity (mAh/g)). The evaluation results of battery characteristics are shown in Table 5.

Table 5

| Category | 3.8 V charge capacity (mAh/g) | 3.8 V discharge capacity (mAh/g) | 3.8 V efficiency (%) | -20□ capacity (mAh/g) | 3.8 V lifetime (%, 50 cycles) |
|---|---|---|---|---|---|
| Embodiment 1 | 165.5 | 164.2 | 99.2 | 95 | 99.6 |

(continued)

| Category | 3.8 V charge capacity (mAh/g) | 3.8 V discharge capacity (mAh/g) | 3.8 V efficiency (%) | -20□ capacity (mAh/g) | 3.8 V lifetime (%, 50 cycles) |
|---|---|---|---|---|---|
| Embodiment 2 | 165.2 | 164 | 99.3 | 92 | 99.2 |
| Embodiment 3 | 164.7 | 163.8 | 99.5 | 90 | 99.3 |
| Embodiment 4 | 165.8 | 164.3 | 99.1 | 91 | 99.1 |
| Comparative Example 1 | 164.1 | 159.7 | 97.3 | 57 | 98.5 |
| Comparative Example 2 | 163.8 | 155.8 | 95.1 | 55 | 97.5 |
| Comparative Example 3 | 163.4 | 156.2 | 95.6 | 58 | 97.1 |
| Comparative Example 4 | 163.5 | 155.0 | 94.8 | 56 | 96.9 |
| Comparative Example 5 | 164.1 | 156.1 | 95.1 | 43 | 94.3 |
| Comparative Example 6 | 162.3 | 154.1 | 94.9 | 63 | 92.3 |

Referring to Table 5, it may be observed that the rechargeable batteries according to Embodiments 1 to 4 of the present disclosure each have their -20 °C discharge capacity greater than that of the rechargeable batteries according to Comparative Examples 1 to 6. Moreover, it may be ascertained that the rechargeable batteries according to Embodiments 1 to 4 of the present disclosure each have their charge-discharge efficiency and lifetime greater than those of the rechargeable batteries according to Comparative Examples 1 to 6.

It may be found that the rechargeable batteries according to Embodiments 1 to 4 each have their higher charge capacity than that and less resistance than that of the rechargeable batteries according to Comparative Examples 1 to 6.

The positive electrode active material according to the present disclosure may be included to allow the positive electrode active material layer to have an increased electric conductivity, a large mixture density (pressed density or pellet density), and a high solid content (e.g., amount). A rechargeable lithium battery according to the present disclosure may have a relatively large operating voltage and relatively high charge-discharge efficiency and may improve the low-temperature characteristics and lifetime properties.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

In the context of the present application and unless otherwise defined, the terms "use," "using," and "used" may be considered synonymous with the terms "utilize," "utilizing," and "utilized," respectively.

A battery (e.g., a positive active material) manufacturing device, a management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure. While this disclosure has been described in connection with what is presently considered to be embodiments, it is to be understood that embodiments of the present disclosure are not limited to the disclosed embodiments and is intended to cover one or more suitable modifications and equivalent arrangements included within the scope of the appended claims, equivalents thereof, and therefore the aforementioned embodiments should be understood to be exemplarily but not limiting this disclosure in any way.

Embodiments are set out in the following clauses:

Clause 1. A positive electrode active material slurry, comprising the positive electrode active material of the present invention, a conductive material, a binder, and a solvent,
wherein the positive electrode active material slurry comprises a solid content in an amount of about 60 wt% to about 70 wt%.

Clause 2. The positive electrode active material slurry of clause 1, wherein an amount of the binder is about 0.5 wt% to about 5 wt% relative to a total weight of the positive electrode active material.

Clause 3. The positive electrode active material slurry of clause 1 or clause 2, wherein a viscosity of the positive electrode active material slurry is in a range of equal to or less than about 7,000 mPa·s.

**Claims**

1. A method of manufacturing a positive electrode active material, comprising:

    forming a mixture by mixing an iron phosphate precursor, a lithium source, a carbon source, and a dopant source with each other;
    performing a spray drying to dry the mixture; and
    performing a calcination on the dried mixture,
    wherein the dopant source includes at least one selected from an aluminium compound, a titanium compound, a vanadium compound, and a magnesium compound.

2. The method as claimed in claim 1, wherein the dopant source comprises at least one selected from among titanium oxide, and titanium chloride.

3. The method as claimed in claim 1 or claim 2, wherein a feed rate of the spray drying is in a range of about 0.1 kg/min to about 0.9 kg/min.

4. The method as claimed in any one of claims 1 to 3, wherein a feed pressure of a spray solution in the spray drying is in a range of about 0.3 MPa to about 0.7 MPa.

5. The method as claimed in any one of claims 1 to 4, wherein a temperature of the spray drying is in a range of about 200 °C to about 300 °C.

6. The method as claimed in any one of claims 1 to 5, wherein, in the performing of the spray drying to dry the mixture, the drying of the mixture comprises forming a secondary particle by aggregating particles of the mixture.

7. The method as claimed in any one of claims 1 to 6, after the performing of the calcination on the dried mixture, the method further comprising performing a dry crushing on the calcined mixture,
wherein the dry crushing is performed at a rotation speed of about 4,000 rpm to about 7,000 rpm.

8. A positive electrode active material, comprising a first particle, wherein the first particle comprises a compound represented by Chemical Formula 1 and has a first average particle diameter,

    wherein the first particle has a form in which second particles are aggregated with each other, the second particles having a second average particle diameter less than the first average particle diameter,

    [Chemical Formula 1]     $Li_{a1}Fe_{x1}By_1PO_{4-b1}$

    wherein, in Chemical Formula 1, $0.8 \leq a1 \leq 1.2$, $0.950 \leq x1 \leq 0.999$, $0.001 \leq y1 \leq 0.05$, $0 \leq b1 \leq 0.05$, and $x1+y1=1$, and
    wherein, in Chemical Formula 1, B is at least one element selected from among Al, Ti, V, and Mg.

9. The positive electrode active material as claimed in claim 8, wherein, in Chemical Formula 1, B is Ti.

10. The positive electrode active material as claimed in claim 8 or claim 9, wherein the first average particle diameter is in a range of about 2 $\mu$m to about 15 $\mu$m.

11. The positive electrode active material as claimed in any one of claims 8 to 10, wherein the second average particle diameter is equal to or less than about 200 nm.

12. The positive electrode active material as claimed in any one of claims 8 to 11, wherein the first particle comprises a carbon-containing coating layer, and
wherein an amount of carbon in the first particle is in a range of about 1.5 wt% to about 2.5 wt%.

13. The positive electrode active material as claimed in any one of claims 8 to 12, wherein the first particle further comprises a grain boundary coating layer on an interface between the secondary particles, and
wherein the grain boundary coating layer comprises carbon.

14. The positive electrode active material as claimed in any one of claims 8 to 13, wherein a porosity of the first particle is in a range of about 20% to about 40%.

15. The positive electrode active material as claimed in any one of claims 8 to 14, wherein a span value of the first particle analyzed with a particle size analyzer is in a range of about 0.3 to about 0.75.

# FIG. 1

# FIG. 2

# FIG. 3

EP 4 641 688 A1

# FIG. 4

# FIG. 5

# FIG. 6

AML1

PTC1

PTC2 PTC2

CDM

BND

# FIG. 7

```
                    ┌─────────┐
                    │  Start  │
                    └────┬────┘
                         │
                         ▼
    ┌──────────────────────────────────────────┐
    │ Mixing of precursor, lithium source,     │──S100
    │   carbon source, and dopant source       │
    └────────────────────┬─────────────────────┘
                         │
                         ▼
    ┌──────────────────────────────────────────┐
    │              Wet crushing                │──S200
    └────────────────────┬─────────────────────┘
                         │
                         ▼
    ┌──────────────────────────────────────────┐
    │              Spray drying                │──S300
    └────────────────────┬─────────────────────┘
                         │
                         ▼
    ┌──────────────────────────────────────────┐
    │              Calcination                 │──S400
    └────────────────────┬─────────────────────┘
                         │
                         ▼
    ┌──────────────────────────────────────────┐
    │              Dry crushing                │──S500
    └────────────────────┬─────────────────────┘
                         │
                         ▼
                    ┌─────────┐
                    │   End   │
                    └─────────┘
```

FIG. 8

# FIG. 9

FIG. 10

Europäisches
Patentamt

European
Patent Office

Office européen
des brevets

# EUROPEAN SEARCH REPORT

**Application Number**

EP 25 16 7967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 882 015 A1 (LG CHEMICAL LTD [KR]) 10 June 2015 (2015-06-10) * paragraphs [0020] - [0021], [0031] - [0042], [0051], [0056], [0060] - [0061], [0064] - [0086], [0083] - [0085]; figure 1; example 1 * | 1-15 | INV. H01M4/58 H01M4/1397 H01M4/62 B01D1/18 B01J2/04 C01B25/45 F26B3/12 |
| X | EP 3 629 404 A1 (SUMITOMO OSAKA CEMENT CO LTD [JP]) 1 April 2020 (2020-04-01) * paragraphs [0012] - [0013], [0017] - [0044], [0053], [0063] - [0081] * | 1-15 | |
| X | CN 114 804 058 A (HUBEI WANRUN NEW ENERGY TECH CO LTD) 29 July 2022 (2022-07-29) * paragraphs [0010] - [0046]; examples 1-6 * & US 2024/391776 A1 (YANG JIAOJIAO [CN] ET AL) 28 November 2024 (2024-11-28) | 1-15 | |
| X | EP 2 360 117 A2 (LG CHEMICAL LTD [KR]) 24 August 2011 (2011-08-24) * paragraphs [0001], [0019] - [0040], [0058] - [0068], [0072]; figures 1-2; examples 1-5; table 1 * | 1-15 | **TECHNICAL FIELDS SEARCHED (IPC)** H01M |

The present search report has been drawn up for all claims

| Place of search | Date of completion of the search | Examiner |
|---|---|---|
| The Hague | 9 August 2025 | Bravo Diaz, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 7967

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2025

| Patent document cited in search report | | Publication date | Patent family member(s) | | Publication date |
|---|---|---|---|---|---|
| EP 2882015 | A1 | 10-06-2015 | CN | 104584283 A | 29-04-2015 |
| | | | EP | 2882015 A1 | 10-06-2015 |
| | | | JP | 6078650 B2 | 08-02-2017 |
| | | | JP | 2015536026 A | 17-12-2015 |
| | | | KR | 20150026863 A | 11-03-2015 |
| | | | TW | 201527207 A | 16-07-2015 |
| | | | US | 2015064557 A1 | 05-03-2015 |
| | | | US | 2018097226 A1 | 05-04-2018 |
| | | | WO | 2015030401 A1 | 05-03-2015 |
| EP 3629404 | A1 | 01-04-2020 | CN | 110504418 A | 26-11-2019 |
| | | | EP | 3629404 A1 | 01-04-2020 |
| | | | JP | 6593510 B1 | 23-10-2019 |
| | | | JP | 2020053290 A | 02-04-2020 |
| | | | KR | 20200035814 A | 06-04-2020 |
| | | | US | 2020106086 A1 | 02-04-2020 |
| CN 114804058 | A | 29-07-2022 | CN | 114804058 A | 29-07-2022 |
| | | | US | 2024391776 A1 | 28-11-2024 |
| | | | WO | 2023226372 A1 | 30-11-2023 |
| EP 2360117 | A2 | 24-08-2011 | BR | PI0919655 A2 | 01-12-2015 |
| | | | CA | 2741042 A1 | 29-04-2010 |
| | | | CN | 102186768 A | 14-09-2011 |
| | | | EP | 2360117 A2 | 24-08-2011 |
| | | | ES | 2541202 T3 | 16-07-2015 |
| | | | JP | 5957728 B2 | 27-07-2016 |
| | | | JP | 6254566 B2 | 27-12-2017 |
| | | | JP | 2012506362 A | 15-03-2012 |
| | | | JP | 2016128371 A | 14-07-2016 |
| | | | JP | 2018062463 A | 19-04-2018 |
| | | | KR | 20100044713 A | 30-04-2010 |
| | | | RU | 2011115055 A | 27-11-2012 |
| | | | TW | 201029919 A | 16-08-2010 |
| | | | US | 2010233540 A1 | 16-09-2010 |
| | | | WO | 2010047524 A2 | 29-04-2010 |

EPO FORM P0459

For more details about this annex : see Official Journal of the European Patent Office, No. 12/82